# FASCICULE DE BREVET EUROPEEN

(11) **EP 1 899 721 B1**
(45) Date de publication et mention de la délivrance du brevet: **17.11.2010**
(21) Numéro de dépôt: 06778765.5
(22) Date de dépôt: 04.07.2006
(51) Int. Cl.: G01N 29/26, G01N 29/22, G10K 11/34

(54) **PROCEDE ET DISPOSITIF DE CONTROLE DE SOUDURE DE RACCORDEMENT DE CONDUITE PAR UNE SONDE A ULTRASONS**
VERFAHREN UND VORRICHTUNG ZUR ÜBERPRÜFUNG EINER ROHRSCHWEISSVERBINDUNG MITTELS EINER ULTRASCHALLSONDE
METHOD AND DEVICE FOR THE INSPECTION OF A PIPE CONNECTION WELDING BY AN ULTRASONIC PROBE

(30) Priorité: 05.07.2005 FR 0507155
(43) Date de publication de la demande: 19.03.2008
(73) Titulaire: SAIPEM S.A., 78180 Montigny-le-Bretonneux (FR)
(72) Inventeur: PASQUALI, Lorenzo, I-27020 Alagna (IT); ROSSI, Massimiliano, I-Codogno (IT)
(74) Mandataire: Domange, Maxime
(86) Numéro de dépôt international: PCT/FR2006/001584
(87) Numéro de publication internationale: WO 2007/006904

(56) Documents cités:
- WO-A-01/71338
- US-A- 5 454 267
- US-A- 5 770 800
- US-A1- 2003 136 195

## Description

La présente invention concerne un procédé de contrôle de soudure sensiblement circulaire pour le raccordement d'une conduite interne et d'une conduite externe coaxiales, soit directement, soit par l'intermédiaire d'une pièce de jonction forgée, par une sonde comprenant des émetteurs-récepteurs piézoélectriques à ultrasons multifaisceaux.

La présente invention concerne également un dispositif de contrôle de soudure circonférentielle utile dans un procédé selon l'invention.

La présente invention concerne plus particulièrement le domaine des conduites à double paroi intégrant un complexe d'isolation, notamment des conduites sous-marines véhiculant des fluides chauds ou froids, plus particulièrement encore des conduites constituées d'un ensemble de deux conduites coaxiales du type PiP comprenant une conduite interne et une conduite externe coaxiale avec un espace annulaire entre les deux, comprenant de préférence un matériau d'isolation thermique.

La présente invention concerne en particulier les conduites sous-marines à isolation renforcée, installés sur les champs pétroliers par grandes profondeurs, ainsi qu'aux conduites en suspension entre le fond de la mer et un navire de surface ancré sur ledit champ pétrolier.

Plus précisément, la présente invention concerne un procédé et un dispositif de contrôle de soudures des extrémités de rames de conduites à double paroi au niveau du raccordement entre la conduite intérieure et l'enveloppe externe

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes laquelle peut largement dépasser 3000m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans ce type de conduite, l'espace annulaire rempli ou non d'un matériau isolant, est en général à une pression absolue inférieure à la pression atmosphérique, voire vidé de tout gaz, et l'on peut, en première approximation, considérer que radialement, la conduite interne résiste à la pression d'éclatement due au fluide interne, alors que l'enveloppe externe résiste à l'implosion créée par la pression hydrostatique au niveau du fond (p.g.h) qui est d'environ 1MPa par tranche de 100 m d'eau, c'est-à-dire 30MPa pour une profondeur de 3000m. L'effet axial dû à la pression, appelé effet de fond, s'exerce sur la section circulaire des conduites et parallèlement à l'axe desdites conduites et se répartit, en première approximation sur les deux conduites (car liées aux extrémités), au prorata des sections respectives de matériaux, en général de l'acier.

Dans le cadre des installations par grande profondeur, les conduites sous-marines ainsi que les ensembles de conduites coaxiales sous-marines sont assemblés à terre en éléments unitaires de conduite ou rames, de longueur unitaire de l'ordre de 20 à 100 m selon la capacité de tenu du système de pose. Puis elles sont transportés ainsi en mer sur un navire de pose. Lors de la pose, les longueurs unitaires des divers éléments d'ensembles de conduites coaxiales sont raccordés les uns aux autres à bord du navire et au fur et à mesure de leur pose en mer. Il est donc important que ce raccordement puisse être intégré dans le procédé de montage et d'assemblage de la conduite et de pose de celle-ci au fond de la mer en le retardant le moins possible, et puisse donc être réalisé rapidement et aisément.

On connaît le brevet FR-2,786,713 qui décrit un mode de raccordement, au niveau de chacune des extrémités d'une rame, entre la conduite interne et la conduite externe, l'extrémité de ladite conduite externe étant en retrait par rapport à celle de ladite conduite interne et étant déformée par « croquage » de manière à ce que son diamètre intérieur au niveau de son extrémité soit ramené sensiblement au même diamètre que le diamètre externe de ladite conduite interne, permettant de ce fait la réalisation d'une soudure circulaire de liaison entre l'extrémité de ladite conduite externe et ladite conduite interne.

Le contrôle de ces soudures internes ne peut pas être réalisées de manière conventionnelle par rayons X ou rayons y, car il n'est pas possible de positionner de manière circulaire un film sensible à l'extérieur de la conduite interne, centré sur le cordon de soudure et recouvrant une certaine largeur de part et d'autre dudit cordon de soudure, car l'enveloppe externe empêche l'accès à la zone située entre ladite enveloppe externe et ladite conduite interne.

On connaît des dispositifs de contrôle de soudure par sonde à ultrasons. Ces dispositifs sont en général mis en oeuvre de manière manuelle par un opérateur et sont déplacés contre et à proximité de la soudure d'une part, axialement en translation d'avant en arrière dans la zone de la soudure, et d'autre part, sur toute la circonférence de la périphérie de la conduite dans ladite zone de soudure, tel que dans WO 01/71338.

Ces dispositifs sont constitués d'un émetteur piézoélectrique en matériau céramique qui émet une onde acoustique ultrasonore pendant un court instant qui est transmise dans la masse d'acier et de métal de la conduite et de la soudure et se réfléchit sur la surface opposée de la conduite. En général, ledit émetteur joue aussi le rôle de capteur, le signal correspondant à l'onde reçue étant transmis par des moyens de traitement électronique à un ordinateur.

On connaît aussi des sondes à ultrasons comportant une série d'émetteurs récepteurs et qui sont appelées sondes multi-faisceaux ou «phased array». La structure de fonctionnement sera explicitée ci-après, en particulier de façon à améliorer le contrôle de la soudure, les différents émetteurs peuvent émettre des ondes dans un même plan perpendiculaire au plan de la face inférieure de la sonde mais dans des directions par rapport audit plan variables, ce qui peut permettre d'étendre la zone géographique d'inspection lorsque la sonde est positionnée fixement, comme il sera explicité ci-après.

Avec ce type de dispositif de contrôle de soudure par ultrasons, un contrôle ne peut être réalisé correctement depuis l'extérieur que sur un côté de la soudure, du côté de l'extrémité de la rame, l'autre côté de la soudure dans l'espace entre les conduites étant inaccessible en raison de la présence de ladite enveloppe externe. Par contre il est possible d'inspecter partiellement la soudure depuis l'enveloppe externe, sauf au niveau de la racine de ladite soudure, dont l'écho acoustique de l'arête ne peut être différentié d'un défaut de soudure redouté, tel une amorce de fissuration.

D'autre part, en procédant depuis l'intérieur, un opérateur a de grandes difficultés de positionner de manière manuelle avec précision la sonde ultrasons, non seulement en raison de la distance de la zone de soudure à inspecter par rapport à l'extrémité de la conduite, mais aussi en raison de la difficulté de visualiser correctement la position exacte de la soudure à contrôler, ce qui rend alors très délicat la mise en évidence des défauts critiques de la soudure. Ce problème est d'autant plus accentué que le diamètre de la conduite interne est plus petit. De plus, lorsque l'opérateur repère un défaut, il ne connaît pas avec une précision extrême le positionnement exact dudit défaut, du fait même qu'il opère de manière manuelle.

Lors de la pose d'un PiP, la flexion engendrée crée des contraintes importantes dans les conduites notamment au niveau de la zone de raccordement de deux longueurs successives de PiP. C'et pourquoi on utilise souvent des pièces de jonction ou pièces de raccordement forgées en acier assemblées aux extrémités des éléments unitaires d'ensembles de conduites coaxiales à assembler. La pièce de jonction à l'extrémité aval d'un premier élément unitaire d'ensemble de conduites coaxiales non encore assemblées, étant raccordée à la pièce de jonction à l'extrémité libre en amont d'un deuxième élément d'ensemble de conduites coaxiales déjà assemblées en aval.

On connaît les brevets GB 2161565, et GB 2191842 qui décrivent un PiP et son mode d'assemblage, ainsi que deux modes de réalisation de pièce de jonction ou de raccordement en acier forgé.

Dans les différents cas, la pièce de jonction forgée comprend en général deux branches de révolution dont une branche externe et une branche interne délimitant un espace annulaire, c'est-à-dire formant une fourche dont les extrémités cylindriques libres sont assemblées aux extrémités sensiblement cylindriques respectivement des conduites externe et interne de ladite conduite PiP, ces assemblages étant réalisés par soudure. Les zones de soudage sont alors particulièrement sensibles au phénomène de fatigue tant durant la pose que pendant la durée de vie de la conduite, c'est pourquoi il est important de pouvoir en contrôler la fiabilité.

Ainsi le problème posé selon la présente invention est de faciliter et améliorer la réalisation du contrôle des soudures à l'aide de sonde à ultrasons au niveau du raccordement d'une conduite interne et d'une conduite externe d'un ensemble de conduites PiP soit directement soudées l'une à l'autre, soit par l'intermédiaire de pièces forgées.

Pour ce faire, la présente invention fournit un procédé de contrôle de soudure circonférentielle sensiblement circulaire pour le raccordement d'une conduite interne et d'une conduite externe coaxiale, soit directement soit par l'intermédiaire d'une pièce de jonction forgée, par sonde à ultrasons, caractérisé en ce que :
- on met en oeuvre une sonde à ultrasons comprenant une pluralité d'émetteurs-récepteurs piézoélectriques multifaisceaux robotisée, et
   a) on positionne au moins une dite sonde à ultrasons à l'intérieur de ladite conduite interne, dans la direction axiale XX' de ladite conduite interne, contre la surface interne de la paroi de ladite conduite interne, au regard ou à proximité de la dite soudure, de sorte que les faisceaux d'ondes acoustiques des différents émetteurs dans un plan axial de ladite conduite interne perpendiculaire au plan de la face inférieure desdits émetteurs recouvrent au moins toute la largeur de la soudure dans ladite direction axiale XX', et ,
   b) on réalise un balayage des différents faisceaux d'ondes des différents émetteurs le la dite sonde, celle-ci étant positionnée à une dite position donnée, et
   c) on déplace ladite sonde en rotation par rapport à l'axe XX' de ladite conduite d'un angle donné, de préférence inférieur à 1°, correspondant de préférence encore à une longueur d'arc inférieure ou égale à la taille des défauts de soudure que l'on veut détecter, puis
   d) on répète les étapes b) et c) jusqu'à inspecter toute la circonférence de ladite soudure.

On entend ici par « robotisée » que ladite sonde est commandée dans son fonctionnement et ses déplacements des étapes a) à d) par des moyens électroniques et un ordinateur.

Avantageusement, les faisceaux d'ondes des différents émetteurs sont envoyés dans un dit plan axial de la conduite interne, dans une pluralité de directions d'inclinaison α de valeurs différentes par rapport au plan de ladite face inférieure desdits émetteurs de manière à ce que en une seule séquence de balayage des différents faisceaux, les différentes zones de ladite soudure dans sa largeur soient inspectées, de préférence de la pointe externe jusqu'à la racine de ladite soudure à l'interface avec ladite conduite interne.

Dans un mode de réalisation particulier, lesdits émetteurs sont rangés en trois zones contiguës dans la direction axiale XX' dont :
- une première zone dans laquelle les émetteurs sont décalés dans ladite direction axiale XX' par rapport à ladite soudure, mais émettent des faisceaux de ladite inclinaison α en direction de ladite soudure, et
- une deuxième zone centrale s'étendant de préférence sur toute la largeur de ladite soudure ou au moins au regard de la partie médiane de la largeur de ladite soudure et dans laquelle lesdits émetteurs émettent des faisceaux sensiblement perpendiculaires au plan de la face inférieure desdits émetteurs, t
- une troisième zone du côté opposé à celui de ladite première zone par rapport à ladite deuxième zone centrale, également décalée dans ladite direction axiale XX' par rapport à ladite soudure et émettant des faisceaux de dite inclinaison en direction de ladite soudure.

Plus particulièrement encore, selon une première variante :
- les différents faisceaux de ladite première zone s'étendent parallèlement selon une dite inclinaison de 30 à 60°, et
- les différents faisceaux de ladite troisième zone s'étendent parallèlement selon plus une dite inclinaison symétrique à celle de ladite première zone d'un angle inverse de 30 à 60°.

Et, selon une seconde variante, les angles d'inclinaison des différents faisceaux desdites première et deuxième zone augmentent, de préférence de 30 à 60°, depuis l'émetteur le plus éloigné et jusqu'à l'émetteur le plus rapproché du centre de ladite soudure.

De façon connue, chaque dite zone d'émetteurs-récepteurs comprend de 16 à 1024 éléments piézo-électriques.

Dans un premier mode de réalisation, ladite soudure a été réalisée depuis l'extérieur de ladite conduite interne.

Dans ce mode de réalisation, plus particulièrement encore, ladite soudure assure le raccordement de l'extrémité d'une conduite externe sur la surface externe de la paroi d'une conduite interne, l'extrémité de ladite conduite externe étant en retrait par rapport à l'extrémité de ladite conduite interne.

Dans un autre mode de réalisation, ladite soudure a été réalisée depuis l'intérieur de ladite conduite interne.

Dans les différents modes de réalisation de la soudure, depuis l'extérieur ou l'intérieur de ladite conduite interne, ladite soudure peut assurer le raccordement de l'extrémité de ladite conduite interne avec l'extrémité d'une pièce de jonction forgée.

Plus particulièrement encore, ladite soudure a été réalisée depuis l'intérieur de ladite conduite interne et présente une surépaisseur par rapport à la surface interne de la paroi de ladite conduite interne , et on met en oeuvre deux dites sondes à ultrasons disposées contre ladite surface interne de part et d'autre de ladite soudure, chaque dite sonde comprenant une pluralité d'émetteurs émettant des faisceaux en direction de ladite soudure de préférence d'un angle de 30 à 60°.

La présente invention fournit également un dispositif de contrôle de soudure circonférentielle utile dans un procédé selon l'invention comprenant :
-- au moins une dite sonde à ultrasons robotisée comprenant une pluralité d'émetteurs-récepteurs piézoélectriques multifaisceaux et
-- des moyens de support mécanique de la dite sonde en position contre la surface interne de la paroi de ladite conduite interne, et
-- des moyens de déplacements motorisés de la dite sonde en translation dans la dite direction axiale XX' et en rotation autour de l'axe XX' de ladite conduite lui permettant de parcourir la circonférence de la surface interne de ladite conduite interne, et
-- des moyens électroniques de commande automatisée desdits moyens de déplacement de ladite sonde, et
-- des moyens électroniques d'analyse et de commande des signaux de ladite sonde reliés à ladite sonde.

Selon l'invention, le dispositif comprend :
- un bâti apte à s'adapter à l'extrémité de ladite de conduite interne ou dite pièce de jonction à l'aide de moyens de fixation,
- le dit bâti comprenant une cavité centrale de guidage dans laquelle est monté axialement un arbre apte à être entraîné en translation axialement à l'intérieur de ladite conduite interne, de préférence à l'aide de vérin ou moteur électrique, de préférence asservis et pilotés par un ordinateur,
- ledit arbre étant apte à être entraîné en rotation autour de son axe XX', de préférence à l'aide d'un moteur électrique, de préférence asservi et piloté par un ordinateur, et comprenant à son extrémité un bras transversal s'étendant radialement par rapport à l'axe de ladite conduite interne et, de préférence apte à être entraîné en translation radiale, et étant apte à être entraîné en rotation par rotation du dit arbre,
- la dite sonde étant montée à l'extrémité du dit bras, de préférence par l'intermédiaire d'une articulation ou rotule.

La présente invention fournit également un procédé de raccordement d'une conduite interne 2 et d'une conduite externe 3 coaxiales d'un ensemble de deux conduites coaxiales, caractérisé en ce que :
- on réalise une soudure de l'extrémité de ladite conduite externe sur la surface de ladite conduite interne, et
- on contrôle ladite soudure par un procédé selon l'invention à l'aide d'un dispositif selon l'invention.

La présente invention fournit également un procédé de raccordement de deux éléments unitaires d'un ensemble de deux conduites coaxiales comprenant chacun une conduite interne 2 et une conduite externe 3, caractérisé en ce que :
- on assemble une pièce de jonction forgée aux extrémités desdites conduites interne et externe de chaque élément unitaire d'ensemble de deux conduites, par soudure entre ladite pièce forgée et lesdites extrémités de conduite interne et externe, et
- on contrôle la soudure entre ladite pièce forgée et l'extrémité de la conduite interne par un procédé selon l'invention à l'aide d'un dispositif selon l'invention.

D'autres caractéristiques et avantages de la présente invention apparaîtront à la lumière de la description détaillée qui va suivre, en référence aux figures suivantes dans lesquelles :
- La figure 1 représente en coupe en vue de côté, une conduite de type PiP 1 composée d'une conduite interne 2 et d'une enveloppe externe 3 dont l'extrémité 3a,3b a été croquée, puis soudée 4 sur une conduite interne 2.
- La figure 1a détaille les différents types de défauts recherchés 5a-5h au sein de la soudure, et dans son environnement immédiat.
- La figure 2 représente en coupe en vue de côté, le dispositif 8 selon l'invention de contrôle automatique de soudure par ultrasons, depuis l'intérieur de la conduite interne, d'une conduite PiP selon la figure 1.
- Les figures 2a-2b représentent en coupe en vue de côté, une sonde 10 de contrôle automatique de la soudure par ultrasons, de type multifaisceaux « phased array », comprenant une seule zone (fig.2a) ou plusieurs zones (fig.2b) de séries d'émetteurs émettant dans des directions différentes.
- La figure 2c représente une variante de la figure 2b.
- La figure 3 représente en en coupe en vue de côté, une rame de conduite PiP 1 dont la conduite interne 2 et l'enveloppe externe 3 sont assemblées par soudage 20a-20d à une pièce de jonction forgée de révolution 20.
- La figure 4 représente en coupe en vue de côté, le dispositif 8 selon l'invention de contrôle automatique de soudure par ultrasons, depuis l'intérieur de la conduite interne, d'une conduite PiP selon la figure 3.
- La figure 4a détaille le fonctionnement des deux sondes indépendantes 10-1,10-2 de la figure 4.

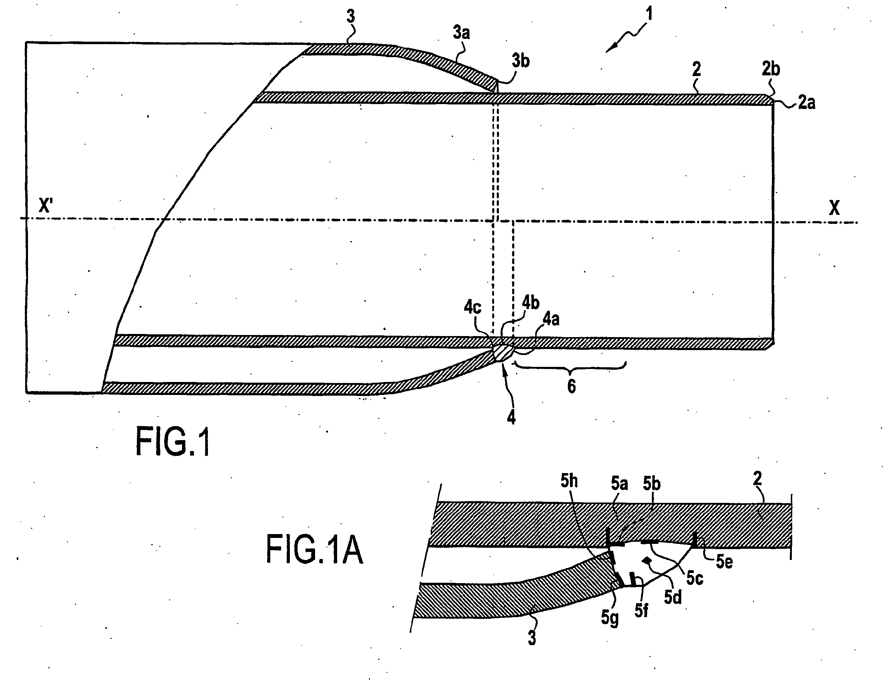

Dans la figure 1, on a représenté en coupe et en vue de côté un PiP 1 constitué d'une conduite interne 2 assemblée par soudure 4 à une enveloppe externe 3, cette dernière ayant été au préalable « croquée » en 3a, de manière à ce que son diamètre interne corresponde sensiblement au diamètre externe de la conduite intérieure et de ce fait, vienne sensiblement en contact avec ladite conduite intérieure. Du fait des variations des caractéristiques mécaniques de l'enveloppe externe à l'extrémité 3a croquée, la distance à l'enveloppe interne n'est en général pas uniforme sur toute la périphérie et peut varier selon les cas dans une fourchette de 0-3mm, voire 0-5mm. Pour la clarté des explications, l'enveloppe externe croquée a été représentée, en partie haute, après croquage et avant soudage, et en partie basse après soudage final.

Un test ultrasons peut être réalisé de manière connue et de manière manuelle par un opérateur équipé d'une sonde conventionnelle angulaire qu'il déplace axialement d'avant en arrière dans la zone 6 depuis l'extérieur de la rame, en balayant successivement la totalité de la périphérie de ladite conduite dans ladite zone 6. L'exploitation des informations s'effectue de manière connue de l'homme de l'art, au fur et à mesure du balayage, et met en évidence les éventuels défauts redoutés. De cette manière, seule la pointe avant 4a de la soudure et la sous-face 4b peuvent être inspectées de manière fiable. En revanche, la racine 4c de la soudure, c'est-à-dire la première passe de soudage, est située à l'opposé, vers l'intérieur de l'enveloppe externe du PiP, ce qui empêche alors tout accès pour son inspection par des moyens conventionnels ultrasons. Or, cette première passe de soudage conditionne bien souvent la qualité globale de la soudure, car lors de cette phase délicate il peut se produire des amorces de fissuration ou des occlusions qui risquent de se propager au sein de la soudure, ce qui conduit en général rapidement à la ruine de l'assemblage. Cependant, il est quand même possible d'inspecter partiellement la soudure en procédant de manière connue depuis l'enveloppe externe, au niveau de la partie croquée 3a, sauf au niveau de la racine de ladite soudure, dont l'écho acoustique de l'arête ne peut être différentié d'un défaut de soudure redouté, tel une amorce de fissuration.

Sur la figure 1a, on a représenté en coupe les défauts redoutés, que l'on cherche à mettre en évidence, pour les réparer ensuite. Les défauts les plus critiques sont les amorces de fissuration 5a et 5b, respectivement radiales et axiales, puis les amorces de fissuration 5c tangentielles à la conduite intérieure 1, dans la racine de la soudure, c'est-à-dire la partie directement en contact avec ladite conduite interne ou interface, et enfin les cavités 5d localisées au sein de la soudure. Les amorces de fissuration 5a-5b sont créées au tout début de la soudure et sont conditionnées par de nombreux facteurs, parmi les quelles nous citerons : le jeu existant entre l'enveloppe externe et la conduite interne, lequel n'est en général pas régulier sur la périphérie et est situé dans une fourchette 0-3mm, voire 0-5mm ; la qualité et la propreté de la tranche de l'enveloppe externe ; l'efficacité de la phase de démarrage de l'arc électrique de soudage, ainsi que la stabilité du bain de soudure pendant les premiers tours.

Les autres défauts 5e à 5h sont créés durant tout le processus dudit soudage et sont en général dus à une instabilité de l'arc électrique ou du bain de soudure. Les amorces de fissuration 5e, 5f, 5g et 5h sont situées respectivement à la pointe extérieure de la soudure à l'interface de la soudure et de ladite conduite 5e, proche de l'enveloppe externe 5f et à l'interface de ladite soudure et de la branche de ladite enveloppe externe 5g-5h. Ces derniers défauts 5e, 5f, 5g & 5h peuvent facilement être mis en évidence depuis l'extérieur par des moyens conventionnels opérés manuellement par le contrôleur, lesdits moyens étant les ultrasons 5e-5g-5h, le ressuage ou l'inspection par particules magnétiques 5e-5f-5g.

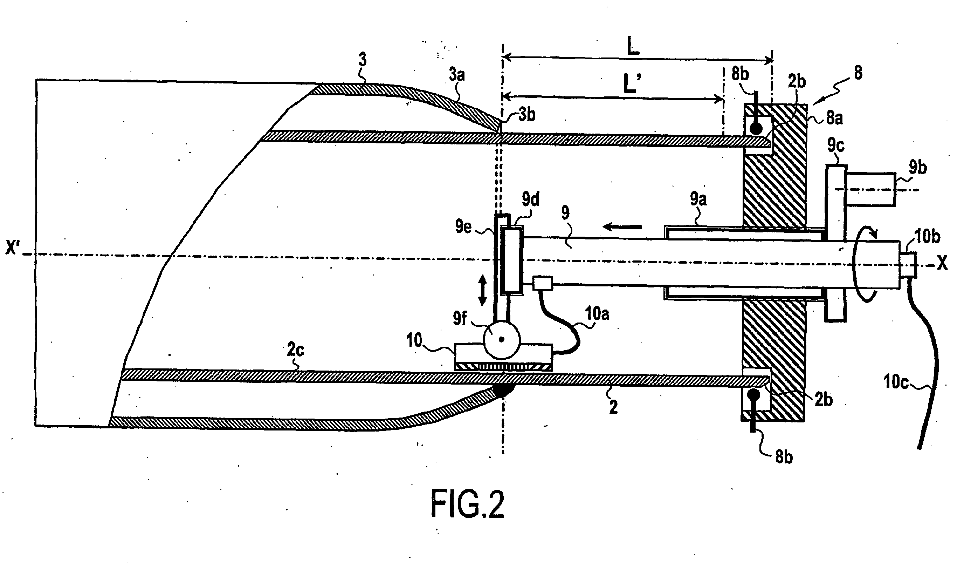

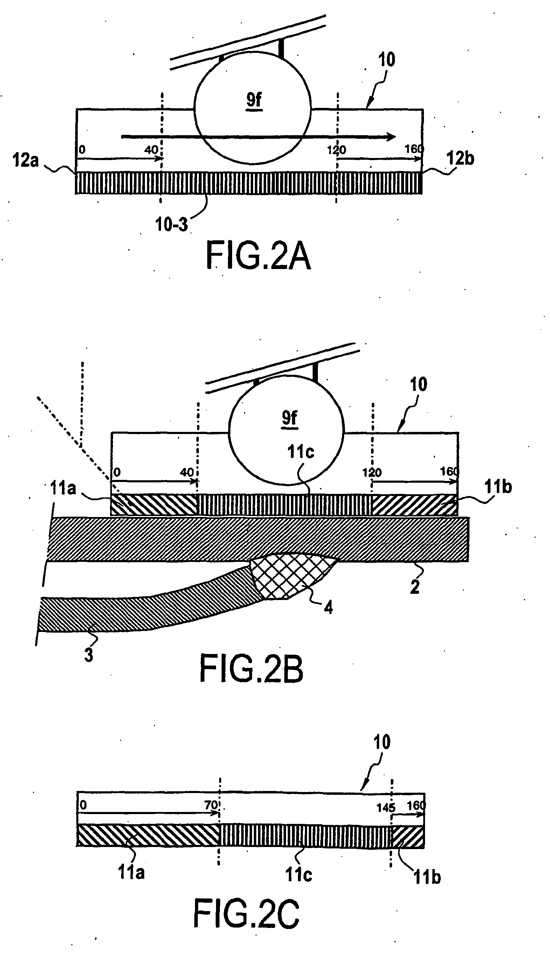

Sur la figure 2 on a représenté en coupe et en vue de côté un PiP 1 à l'extrémité duquel on a installé un robot de contrôle de soudure par ultrasons selon l'invention, permettant d'effectuer de manière automatique le contrôle de la zone de la soudure 4 en vue de détecter principalement les défauts de type 5a-5b-5c-5d et éventuellement les défauts des autres types précédemment cités. A cet effet, le dispositif 8 selon l'invention est constitué d'un bâti 8a venant s'adapter à l'extrémité de la conduite interne préalablement usinée sur sa face 2a et éventuellement au niveau du chanfrein 2b en vue de son raccordement futur par soudage sur une deuxième rame ou sur une pièce de jonction forgée, raccordement effectué sur site à bord d'un navire d'installation équipé d'une tour de pose en J. Le bâti 8a est centré par rapport à l'axe XX du PiP et maintenu en place grâce à des moyens de serrage ajustables 8b. Un arbre 9, mobile en translation selon l'axe XX dans un canon de guidage 9a solidaire du bâti 8a et le traversant axialement est déplacé en translation selon ledit axe XX par un actionneur, non représenté, qui peut être par exemple un vérin ou un moteur électrique, de préférence asservi et piloté par un ordinateur. De plus, ledit arbre 9 est mobile en rotation autour du même axe XX, au sein dudit canon de guidage 9a. Ladite rotation de l'arbre 9a est actionnée par un moteur électrique 9b, de préférence asservi et piloté par ledit ordinateur, par l'intermédiaire d'un élément de transmission 9c. A l'avant de l'arbre 9, un support de guidage 9d, solidaire dudit arbre maintient un bras transversal 9e et le guide dans une direction perpendiculaire à la paroi interne 2c de la conduite intérieure 2, ledit bras 9e supporte une sonde à ultrasons 10 solidaire de ce dernier par l'intermédiaire d'une articulation 9f d'axe perpendiculaire au plan de la figure. Ladite sonde à ultrasons est maintenue en contact intime avec la paroi interne 2c de la conduite interne 2, de préférence avec une force d'appui constante, au moyen d'un actionneur non représenté, par exemple un vérin pneumatique. Un film d'eau servant au couplage entre la sonde à ultrasons et la paroi interne métallique, est maintenu de manière connue pendant tout la durée du cycle de contrôle. Pour la clarté des dessins, la sonde 10 est représentée sur l'ensemble des figures à une faible distance de la paroi 2c de la conduite 2, mais en fait elle est quasiment en contact direct avec ladite paroi par l'intermédiaire du film de couplage, en général un film d'eau. Un câble électrique 10a véhicule les courants d'excitation et de réception des transducteurs ultrasons depuis la sonde passant par l'intérieur de l'arbre 9 jusqu'à un joint tournant 10b situé de préférence à l'arrière de l'arbre principal 9 et dans l'axe de ce dernier, puis vers les dispositifs électroniques de contrôle-commande, non représentés, par l'intermédiaire du câble électrique 10c.

La figure 2a est une coupe en vue de côté d'une sonde ultrasons 10 comportant un réseau de sondes piézoélectriques, donc d'émetteurs-récepteurs, dont le mode de fonctionnement particulier est explicité ci-après. Ce type de sonde est connue sous le nom de « phased array », c'est-à-dire sonde multiéléments à déclenchement séquentiel, constituée de 16 à 1024 émetteurs-récepteurs piézoélectriques disposés en ligne capables d'émettre et de recevoir les ondes perpendiculairement à la face inférieure de ladite sonde. Chacun des groupes d'éléments piézoélectriques est déclenché en séquence à intervalle régulier avec le précédent, depuis le premier élément 12a situé à la gauche de la sonde, jusqu'au dernier élément 12b situé à la droite de la sonde, comme représenté sur ladite figure 2b. Les émetteurs sont configurés en émetteurs ainsi qu'en récepteurs et les informations reçues sont transmises aux dispositifs électroniques de traitement du signal de manière à afficher en temps réel la position des défauts recherchés.

Sur la figure 2a tous les faisceaux sont représentés perpendiculaires à la sonde, ce qui correspond à un intervalle régulier entre déclenchement de l'émetteur N et de l'émetteur N+1, en l'absence de toute interférence entre lesdits émetteurs. La particularité de ce type de sonde est que l'électronique de commande est capable de cadencer les déclenchements avec des intervalles variables et extrêmement précis de telle manière que le déclenchement de l'émetteur N crée une perturbation sur le faisceau acoustique N-1, N-2, etc., et aussi sur les futurs faisceaux N+1, N+2, etc. créant de ce fait, par destruction du signal emis, des faisceaux qui ne sont plus perpendiculaires, mais qui présentent un angle α par rapport au plan de la face inférieure de la sonde. La gestion informatique au sein du système de contrôle commande permet ainsi de diriger à la demande les faisceaux de chacun des émetteurs. Selon la présente invention, comme explicité sur la figure 2b, une première zone comprenant une première série 11a d'émetteurs notés de N-0 à N-40 est configurée avec un angle α=45° dirigé vers la droite, suivi d'une seconde zone d'une série 11c d'émetteurs notés de N-41 à N-120 en partie centrale, configurés en mode perpendiculaire, puis enfin une troisième zone d'une série d'émetteurs notés de N-121 à N-160, configurés avec un angle α=-45° dirigé vers la gauche. Ainsi, en une seule séquence de balayage on récupère toutes les informations nécessaires à la mise en évidence des défauts dans le plan inspecté, d'abord dans la zone de la racine 4c de la soudure, grâce à la première série d'émetteurs-récepteurs, puis dans la zone de la soudure proprement dite 4b, grâce à la seconde série d'émetteurs-récepteurs, et enfin dans la zone de la pointe 4a de la soudure, grâce à la troisième série d'émetteurs-récepteurs. Contrairement au déplacement manuel d'une sonde conventionnelle mise en oeuvre par un opérateur qui doit balayer axialement d'avant en arrière dans la direction XX' de la zone de soudure à inspecter, la sonde reste fixe et le balayage axial s'effectue de manière électronique et entièrement automatique grâce au système de contrôle commande de ladite sonde. De plus il est possible de modifier les différentes zones comme représenté sur la figure 2c dans laquelle les trois plages précédemment explicitées, sont ajustées aux valeurs N-0- N-70- N-145- N-160. On améliorera avantageusement considérablement la précision des première et troisième zones d'angle α en configurant dans chacune d'elles un angle moyen, par exemple α=45°, l'angle variant de α=30° au niveau de l'émetteur N-0 à α=50° au niveau de l'émetteur N-40, ce qui permet de focaliser le faisceau et conduit à une meilleure localisation des défauts recherchés.

Un tel système de contrôle ultrasons à « phased array » configurable à la demande comme explicité ci-dessus, est disponible sous l'appellation Omniscan auprès de la société R/D Tech - Canada.

Une fois la sonde multiéléments 10 configurée correctement, le dispositif selon l'invention est installé comme détaillé sur la figure 2, et la position de ladite sonde est ajustée de manière très précise par rapport à la zone à contrôler. A cet effet, avant que la soudure ne soit réalisée, la distance L de l'arête 3b de l'extrémité de l'enveloppe externe jusqu'à la face avant de l'extrémité de la conduite intérieure est mesurée avec précision, la position de l'arbre 9 est alors simplement ajustée pour que la sonde multiéléments 10 soit positionnée avec une grande précision par rapport à la soudure 4. Le cycle automatique de rotation circonférentielle est alors initié à partir d'une position de départ parfaitement repérée, par exemple la tangente inférieure de la conduite intérieure comme représenté sur l'ensemble des figures. L'arbre 9 étant en position fixe en translation correspondant au point de référence zéro, un premier balayage de N-0 à N-160 est effectué par le dispositif de contrôle-commande, puis l'arbre 9 et donc la sonde, est pivoté sur son axe XX, par exemple dans le sens horaire, par l'intermédiaire de l'actionneur 9b piloté par ledit système de contrôle-commande, d'un incrément d'angle, par exemple 0.1° correspondant à une dimension d'arc de cercle de taille supérieure à la taille des défauts minimum que l'on souhaite pouvoir détecter dans la soudure compte tenu du diamètre de la conduite, en l'espèce 0.26mm pour une conduite interne de diamètre extérieur 300mm. La sonde se trouve alors face à un nouveau secteur de circonférence axé sur un plan radial contenant l'axe XX' déplacé de 0.1° et un nouveau balayage de N-0 à N-160 est effectué dans ce secteur, et ainsi de suite jusqu'à ce qu'un tour complet de la circonférence ait été effectué, ce qui représente 3600 cycles pour ledit incrément de 0.1°.

L'ensemble des informations est traité, de manière connue de l'homme de l'art, au sein du système informatique et les résultats sont alors imprimés sous une forme synthétique, en général en fausses couleurs de manière à mieux mettre en évidence les défauts et leur type, sous une forme facilement et directement exploitable.

Dans le cas ou la face avant 3b de l'extrémité de la conduite intérieure est brute de découpe et donc irrégulière, ou dans le cas où le plan de la section n'est pas perpendiculaire à l'axe, ladite face ne peut pas être prise comme référence pour le positionnement précis du dispositif 8. On réalise alors avantageusement, avant que ne soit réalisée la soudure 4, un trusquinage circulaire à une distance L' par rapport à l'arête 3b, de manière à créer un repère circulaire à ladite distance L' de ladite arête. Il suffit alors de positionner le bâti 8a à une distance connue dudit trusquinage pour que la sonde 10 soit dans la position voulue par rapport à la soudure 4 à contrôler. Au cas ou l'arête 3b ne serait pas dans un plan perpendiculaire à l'axe XX', le trusquinage présentera lui aussi les mêmes déformations ; on positionnera alors le bâti 8a dans une position moyenne par rapport audit trusquinage. Le trusquinage a été décrit par rapport à l'arête supérieure 3b, mais on améliorera avantageusement la précision du tracé en effectuant ledit trusquinage par rapport à l'arête inférieure de l'extrémité croquée, ladite arête étant sensiblement en contact avec la conduite interne.

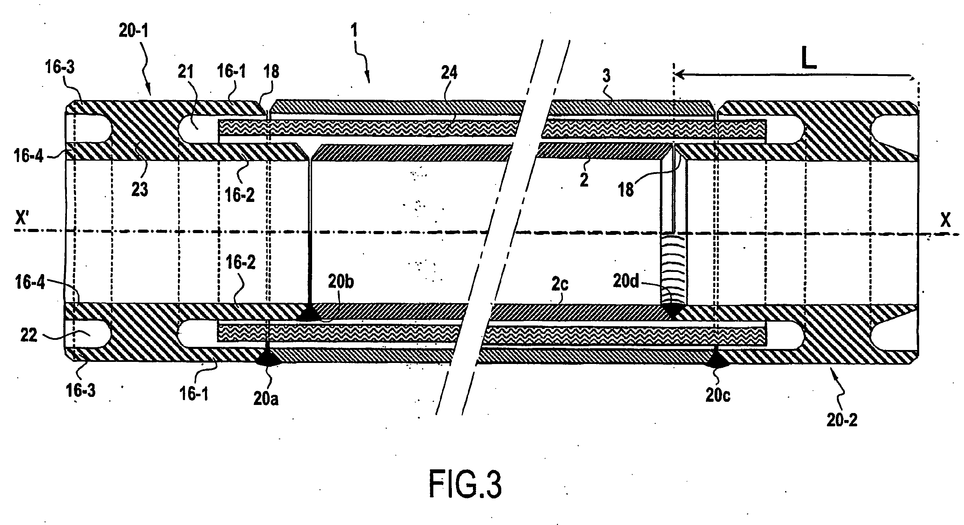

Sur la figure 3 on a représenté les deux extrémités d'une rame 1 constituée d'une enveloppé externe 3 et d'une conduite interne 2 reliées de façon connue à chacune de leurs extrémités à une pièce forgée de jonction 20, sur la gauche de la figure les soudures 20a et 20b respectivement avec les conduites externes et internes sont effectuées depuis l'extérieur, alors que sur la droite de la même figure, la soudure 20c est effectuée depuis l'extérieur, alors que la soudure 20d est effectuée depuis l'intérieur de la conduite interne 2.

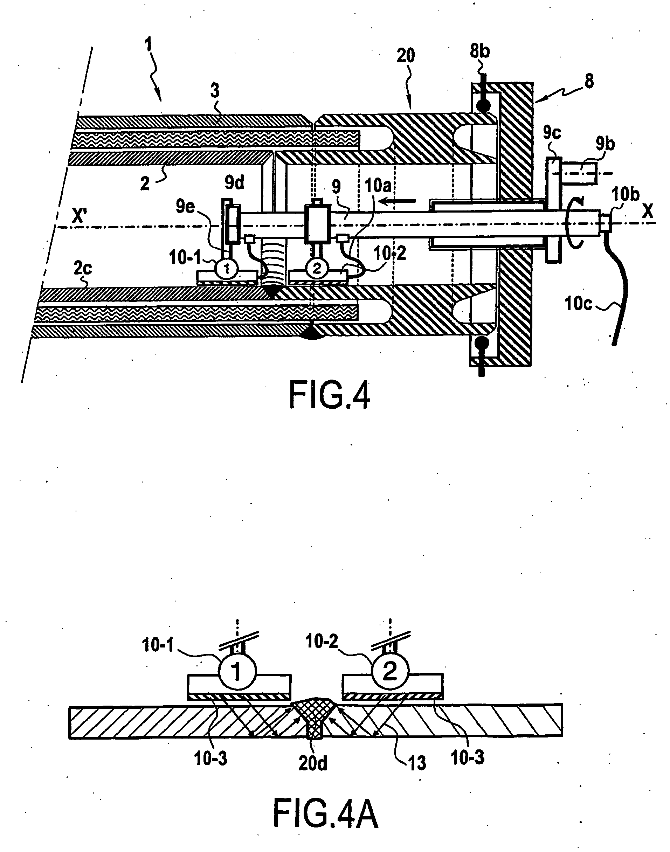

Le contrôle de ces soudures internes entre les extrémités de la conduite interne et la pièce forgée 20b et 20d est avantageusement réalisé à l'aide du même dispositif de contrôle 8, mais il doit alors être équipé de deux sondes 10-1 et 10-2, comme détaillé sur la figure 4. En effet, dans cette configuration, lesdits cordons de soudure traversant intégralement la paroi de la conduite interne, la surface interne 2c de ladite conduite interne 2 n'est pas uniforme et présente une surépaisseur, souvent assez variable, localisée sur toute la circonférence.

La pièce forgée 20 étant une pièce usinée avec précision, la longueur L est connue et il est alors très simple d'installer le dispositif 8 à l'extrémité de ladite pièce forgée et d'ajuster la position du bras 9 pour que l'ensemble des sondes 10-1 et 10-2 se trouvent correctement positionnées de part et d'autre du cordon de soudure à contrôler. Le mode opératoire est identique à ce qui a été décrit en relation avec les figures 2-2a-2b-2c, mais dans ce cas, comme représenté sur la figure 4a, la sonde 10-1 est configurée avec un angle constant ou légèrement variable, par exemple α=45°, alors que la sonde 10-1 est configurée avec un angle symétrique constant ou légèrement variable, par exemple α=-45°.

Pour la compréhension du processus de contrôle ultrason, on a représenté sur cette même figure 4a, le cheminement des ondes acoustiques 13 émises. Après réflexion sur des défauts, l'onde en retour parcours un chemin inverse avec des retards dus à la distance parcourue. L'enregistrement de ces retards ainsi que de l'amplitude du signal permettent par un traitement du signal de donner une représentation graphique des défauts, en type, taille et position.

Une sonde conventionnelle ultrasons est constituée d'un émetteur piézoélectrique en matériau céramique disposé contre la paroi externe de lé conduite au niveau de la soudure, qui pendant un court instant émet un signal sous forme d'ondes acoustiques ultrasons, puis le signal est transmis à la masse d'acier par l'intermédiaire du médium de couplage, en général de l'eau, puis il se réverbère sur la surface opposée de la paroi de la conduite intérieure et sur tout défaut qui est alors considéré comme un obstacle. Le signal en retour est reçu par un capteur, en général ledit émetteur joue aussi le rôle de récepteur, puis le signal est transmis à des moyens de traitement électroniques qui après traitement affichent des informations, en général directement exploitables, sur un écran, ou imprimables sur un papier.

Sur la figure 3, ladite pièce de jonction 20-1,20-2 est délimitée comme suit :
- dans une direction radiale par rapport à un axe longitudinal XX' de révolution de ladite pièce, elle est délimitée par une paroi interne cylindrique sensiblement de même diamètre que celui de la partie courante de ladite conduite interne 2, et par une paroi externe cylindrique de diamètre sensiblement égal au diamètre externe de la partie courante de ladite conduite externe 3, et
- dans la direction axiale longitudinale XX',
- du côté de ladite pièce de jonction destiné à être assemblé par soudage à l'extrémité desdites conduites externe et interne d'un dit élément d'un ensemble d'au moins deux conduites coaxiales, lesdites parois externe et interne de ladite pièce de jonction forment en section longitudinale des premières branches respectivement externe 16-1 et interne 16-2 sensiblement de même épaisseur que lesdites conduites externe 3 et interne 2 auxquelles elles sont destinées à être assemblées, lesdites premières branches externe 16-1 et interne 16-2 délimitant une première cavité annulaire 21, et
- du côté opposé de ladite pièce de jonction destinée à être assemblée à une autre dite pièce de jonction, elle-même assemblée par soudage à l'extrémité d'un autre élément d'ensemble de deux conduites coaxiales, lesdites parois externe et interne forment en section longitudinale des deuxièmes branches respectivement externe 16-3 et interne 16-4, délimitant une deuxième cavité annulaire 22,
- les fonds desdites première et deuxième cavités 21, 22 étant espacés dans ladite direction longitudinale XX', de manière à délimiter une zone pleine 23 de ladite pièces de jonction dans laquelle lesdites parois externe et interne forment les faces externe et interne d'une même paroi cylindrique.

Comme montré sur la figure 3, la première cavité annulaire 21 est ouverte sur l'espace annulaire et peut recevoir le matériel d'isolation, 24 de façon à continuer l'isolation de la conduite le plus loin possible.

Après assemblage et raccordement de deux longueurs unitaires de PiP équipées de pièces de jonction forgées selon l'invention, la deuxième cavité annulaire 22 d'une première pièce de jonction à l'extrémité aval d'une première longueur de PiP est ouverte sur une deuxième cavité annulaire d'une deuxième pièce de jonction 20-1 à l'extrémité amont d'une deuxième longueur de PiP formant ainsi une chambre formée par soudage au niveau des extrémités des deuxièmes branches externes 16-3. Mais cette chambre n'est pas étanche, car l'extrémité des deuxièmes branches internes 16-4 des deux pièces de jonction 20-1, 20-2, n'est pas soudée, les faces desdites branches étant simplement en contact l'une avec l'autre.

Les extrémités libres desdites premières branches externe 16₁ et interne 16₂ présentent une forme, en chanfrein 8, ce qui permet d'effectuer de manière connue une première passe de soudage dite « de pleine pénétration », suivi d'un remplissage complet du chanfrein à gauche (fig.3), les chanfreins 18 sont tournés vers l'extérieur et sont donc aptes à être soudés depuis l'extérieur desdites conduites externe 16-1 et interne 16-2. A droite, les chanfreins 18 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

Sur la figure 3, les extrémités libres de ladite deuxième branche externe 16-1 présentent une forme en chanfrein 18 tourné vers l'extérieur d'une première pièce de jonction 20-1 la rendant apte à être soudée depuis l'extérieur à l'extrémité libre d'une autre dite deuxième branche externe d'une autre pièce de jonction 20-2 à laquelle elle est destinée à être assemblée, ladite autre pièce de jonction étant, elle-même, à l'extrémité d'un deuxième élément d'ensemble de deux conduites coaxiales.

Dans la pièce de jonction forgée 6a, l'extrémité de ladite première branche interne 16-2 du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe 16-1, de manière à ce que ladite pièce de jonction puisse être assemblée par soudage à un dit ensemble de conduites coaxiales dont l'extrémité de ladite conduite externe dépasse par rapport à celle de ladite conduite interne.

Les pièces de jonction forgées 20-1, 20-2 présentent un diamètre externe et une épaisseur de paroi sensiblement égaux, de préférence égaux, à celui de la portion courante d'enveloppe externe. En procédant ainsi, la conduite présente sur toute sa longueur une inertie sensiblement constante, ce qui évite les accumulations de contraintes au niveau des raccordements entre deux longueurs unitaires de PiP et améliore considérablement le comportement en flexion et en fatigue de la conduite et lui permet alors de résister, surtout dans le cas des liaisons fond-surface soumises aux effets de la houle et du courant, pendant toute la durée de vie des installations qui atteint et dépasse 30 ans.

## Revendications

1. Procédé de contrôle de soudure circonférentielle sensiblement circulaire (4) pour le raccordement d'une conduite interne (2) et d'une conduite externe (3) coaxiales, soit directement soit par l'intermédiaire d'une pièce de jonction forgée (20), par une sonde à ultrasons (10), **caractérisé en ce que** :
- on met en oeuvre une sonde à ultrasons (10) comprenant une pluralité d'émetteurs- récepteurs piézoélectriques multifaisceaux robotisée, et
a) on positionne au moins une dite sonde à ultrasons (10,10-1,10-2) à l'intérieur de ladite conduite interne, dans la direction axiale (XX') de ladite conduite interne, contre la surface interne (2c) de la paroi de ladite conduite interne, au regard ou à proximité de la dite soudure, de sorte que les faisceaux d'ondes acoustiques des différents émetteurs dans un plan axial de ladite conduite interne perpendiculaire au plan de la face inférieure (10-3) desdits émetteurs recouvrent au moins toute la largeur de la soudure dans ladite direction axiale (XX'), et
b) on réalise un balayage des différents faisceaux d'ondes des différents émetteurs de ladite sonde, celle-ci étant positionnée à une dite position donnée, et
c) on déplace ladite sonde en rotation par rapport à l'axe (XX') de ladite conduite d'un angle donné, de préférence inférieur à 1°, correspondant de préférence encore à une longueur d'arc inférieure ou égale à la taille des défauts de soudure que l'on veut détecter, puis
d) on répète les étapes b) et c) jusqu'à inspecter toute la circonférence de ladite soudure.

2. Procédé selon la revendication 1 **caractérisé en ce que** les faisceaux d'ondes des différents émetteurs sont envoyés dans un dit plan axial de la conduite interne, dans une pluralité de directions d'inclinaison (α) de valeurs différentes par rapport au plan de ladite face inférieure (10-3) desdits émetteurs de manière à ce que en une seule séquence de balayage des différents faisceaux, les différentes zones de ladite soudure dans sa largeur soient inspectées, de préférence de la pointe externe (4a) jusqu'à la racine (4c) de ladite soudure à l'interface avec ladite conduite interne.

3. Procédé selon la revendication 2 **caractérisé en ce que** lesdits émetteurs sont rangés en trois zones contiguës dans la direction axiale XX' dont :
- une première zone (11a) dans laquelle les émetteurs sont décalés dans ladite direction axiale (XX') par rapport à ladite soudure, mais émettent des faisceaux de ladite inclinaison (α) en direction de ladite soudure, et
- une deuxième zone centrale (11c) s'étendant de préférence sur toute la largeur de ladite soudure ou au moins au regard de la partie médiane de la largeur de ladite soudure et dans laquelle lesdits émetteurs émettent des faisceaux sensiblement perpendiculaires au plan de la face inférieure (10-3) desdits émetteurs (α=90), et
- une troisième zone (11b) du côté opposé à celui de ladite première zone (11a) par rapport à ladite deuxième zone centrale (11c), également décalée dans ladite direction axiale (XX') par rapport à ladite soudure et émettant des faisceaux de dite inclinaison en direction de ladite soudure.

4. Procédé selon la revendication 3 **caractérisé en ce que** :
- les différents faisceaux de ladite première zone (11a) s'étendent parallèlement selon une dite inclinaison (α) de 30 à 60°, et
- les différents faisceaux de ladite troisième zone (11b) s'étendent parallèlement selon une dite inclinaison symétrique à celle de ladite première zone d'un angle (α) inverse de 30 à 60°.

5. Procédé selon la revendication 3 **caractérisés en ce que** les angles d'inclinaison (α) des différents faisceaux desdites première et deuxième zone augmentent, de préférence de 30 à 60°, depuis l'émetteur le plus éloigné et jusqu'à l'émetteur le plus rapproché du centre de ladite soudure.

6. Procédé selon l'une des revendications 3 à 5 **caractérisé en ce que** chaque dite zone d'émetteurs (11a,11b,11c) comprend de 16 à 1024 éléments piézoélectriques.

7. Procédé selon l'une des revendications 1 à 6 **caractérisé en ce que** ladite soudure (4,20a-20c) a été réalisée depuis l'extérieur de ladite conduite interne (2).

8. Procédé selon la revendication 7 **caractérisé en ce que** ladite soudure assure le raccordement de l'extrémité (3 b) d'une conduite externe (3) sur la surface externe de la paroi d'une conduite interne (2), l'extrémité (3b) de ladite conduite externe étant en retrait par rapport à l'extrémité (2b) de ladite conduite interne.

9. Procédé selon l'une des revendications 1 à 6 **caractérisé en ce que** ladite soudure (20d) a été réalisée depuis l'intérieur de ladite conduite interne (2).

10. Procédé selon l'une des revendications 7 ou 9 **caractérisé en ce que** ladite soudure (20b,20d) assure le raccordement de l'extrémité (2b) de ladite conduite interne (2) avec l'extrémité d'une pièce de jonction forgée (20).

11. Procédé selon l'une des revendications 9 ou 10 **caractérisé en ce que** ladite soudure (20 d) a été réalisée depuis l'intérieur de ladite conduite interne et présente une surépaisseur par rapport à la surface interne (2c) de la paroi de ladite conduite interne , et on met en oeuvre deux dites sondes à ultrasons (10-1,10-2) disposées contre ladite surface interne de part et d'autre de ladite soudure, chaque dite sonde (10-1,10-2) comprenant une pluralité d'émetteurs émettant des faisceaux en direction de ladite soudure de préférence d'un angle de 30 à 60°.

12. Dispositif de contrôle de soudure circonférentielle (8) utile dans un procédé selon l'une des revendications 1 à 11 comprenant :
-- au moins une dite sonde à ultrasons (10, 10-1, 10-2) robotisée comprenant une pluralité d'émetteurs-récepteurs piezoélectriques multifaisceaux et
-- des moyens de support mécanique de la dite sonde (8a, 8b,9d,9e, 9f) en position contre la surface interne de la paroi d'une dite conduite interne, et
-- des moyens de déplacements motorisés de la dite sonde (9, 9b,9e) en translation dans la dite direction axiale (XX') et en rotation autour de l'axe (XX') de ladite conduite lui permettant de parcourir la circonférence de la surface interne (2c) de ladite conduite interne, et
-- des moyens électroniques de commande automatisée desdits moyens de déplacement de ladite sonde, et
-- des moyens électroniques d'analyse et de commande des signaux de ladite sonde reliés (10a,10c) à ladite sonde.
**caractérisé en ce qu'**il comprend :
- un bâti (8a) apte à s'adapter à l'extrémité de ladite de conduite interne ou dite pièce de jonction (20) à l'aide de moyens de fixation (8 b),
- le dit bâti (8a) comprenant une cavité centrale de guidage (9a) dans laquelle est monté axialement un arbre (9) apte à être entraîné en translation axialement à l'intérieur de ladite conduite interne, de préférence à l'aide de vérins ou moteur électrique,
- ledit arbre étant apte à être entraîné en rotation autour de son axe (XX'), de préférence à l'aide d'un moteur électrique (9b), et comprenant à son extrémité un bras transversal (9e) s'étendant radialement par rapport à l'axe de ladite conduite interne et, de préférence apte à être entraîné en translation radiale, et étant apte à être entraîné en rotation par rotation du dit arbre,
- la dite sonde étant montée à l'extrémité du dit bras (9e), de préférence par l'intermédiaire d'une articulation ou rotule (9f).

13. Procédé de raccordement d'une conduite interne (2) et d'une conduite externe (3) coaxiales d'un ensemble de deux conduites coaxiales, **caractérisé en ce que** :
- on réalise une soudure de l'extrémité de ladite conduite externe sur la surface de ladite conduite interne, et
- on contrôle ladite soudure par un procédé selon l'une des revendications 1 à 9 à l'aide d'un dispositif selon la revendication 12.

14. Procédé de raccordement de deux éléments unitaires d'un ensemble de deux conduites coaxiales comprenant chacun une conduite interne (2) et une conduite externe (3), **caractérisé en ce que** :
- on assemble une pièce de jonction forgée aux extrémités desdites conduites interne et externe de chaque élément unitaire d'ensemble de deux conduites, par soudure entre ladite pièce forgée et lesdites extrémités de conduite interne et externe, et
- on contrôle la soudure entre ladite pièce forgée et l'extrémité de la conduite interne par un procédé selon la revendication 10 à l'aide d'un dispositif selon la revendication 12.

## Claims

1. A method of inspecting substantially circular circumferential welding (4) for connecting an inner pipe (2) to a coaxial outer pipe (3), either directly or else via a junction forging (20), inspection being performed by an ultrasound probe (10), and the method **characterized by**:
- using an ultrasound probe (10) comprising a plurality of robotic multibeam piezoelectric emitter-receivers; and
a) positioning at least one said ultrasound probe (10, 10-1, 10-2) inside said inner pipe, in the axial direction (XX') of said inner pipe against the inside surface (2c) of the wall of said inner pipe, facing or close to said weld, so that the ultrasound beams from the various emitters in the axial plane of said inner pipe perpendicular to the plane of the bottom faces (10-3) of said emitters cover at least the entire width of the weld in said axial direction (XX'); and
b) causing the various ultrasound beams of the various emitters of said probe to scan while the probe is positioned in a said given position; and
c) moving said probe in rotation about the axis (XX') of said pipe through a given angle, preferably less than 1°, more preferably corresponding to an arc of length that is less than or equal to the size of the weld defects that are to be detected; and then
d) repeating steps b) and c) until the entire circumference of said weld has been inspected.

2. A method according to claim 1, **characterized in that** the ultrasound beams from the various emitters are sent in said axial plane of the inner pipe in a plurality of different angles of inclination (α) having different values relative to the plane of said bottom faces (10-3) of said emitters so that in a single sequence of scanning the various beams, the various zones of said weld are inspected across its width, preferably from the external tip (4a) to the root (4c) of said weld at the interface with said inner pipe.

3. A method according to claim 2, **characterized in that** said emitters are arranged in three contiguous zones in the axial direction XX', comprising:
- a first zone (11a) in which the emitters are offset in said axial direction (XX') relative to said weld, and emit beams at said angle of inclination (α) towards said weld; and
- a central second zone (11c) preferably extending over the entire width of said weld and in register with at least the middle portion of the width of said weld, and in which said emitters emit beams substantially perpendicular to the plane of said bottom faces (10-3) of said emitters (α=90); and
- a third zone (11b) at the end of said central second zone (11c) opposite from the end at which said first zone (11a) is located, and likewise offset in said axial direction (XX') relative to said weld and emitting beams at said angle of inclination towards said weld.

4. A method according to claim 3, **characterized in that**:
- the various beams of said first zone (11a) extend in parallel at a said angle of inclination (α) lying in the range 30° to 60°; and
- the various beams of said third zone (11b) extend parallel at a said angle of inclination symmetrical to that of said first zone with an opposite angle (α) lying in the range 30° to 60°.

5. A method according to claim 3, **characterized in that** the angles of inclination (α) of the various beams of said first and second zones increase, preferably from 30° to 60° from the emitter that is furthest away from the center of said weld to the emitter that is closest thereto.

6. A method according to any one of claims 3 to 5, **characterized in that** each said zone of emitters (11a, 11b, 11c) comprises 16 to 1024 piezoelectric elements.

7. A method according to any one of claims 1 to 6, **characterized in that** said weld (4, 20a-20c) is made from outside said inner pipe (2).

8. A method according to claim 7, **characterized in that** said weld connects the end (3b) of an outer pipe (3) to the outside surface of the wall of an inner pipe (2), the end (3b) of said outer pipe being set back from the end (2b) of said inner pipe.

9. A method according to any one of claims 1 to 6, **characterized in that** said weld (20d) is made from the inside of said inner pipe (2).

10. A method according to claim 7 or claim 9, **characterized in that** said weld (20b, 20d) connects the end (2b) of said inner pipe (2) to the end of a junction forging (20).

11. A method according to claim 9 or claim 10, **characterized in that** said weld (20d) is made from the inside of said inner pipe and presents extra thickness relative to the inside surface (2c) of the wall of said inner pipe, and two of said ultrasound probes (10-1, 10-2) are used placed against said inside surface on either side of said weld, each of said probes (10-1, 10-2) comprising a plurality of emitters emitting beams towards said weld, preferably at an angle lying in the range 30° to 60°.

12. A device for inspecting a circumferential weld (8) and usable in a method according to any one of claims 1 to 11, the device comprising:
- at least one said robotic ultrasound probe (10, 10-1, 10-2) comprising a plurality of multibeam piezoelectric emitter-receivers; and
- mechanical support means for supporting said probe (8a, 8b, 9d, 9e, 9f) in position against the inside surface of the wall of a said inner pipe; and
- motorized displacement means for moving said probe (9, 9b, 9e) in translation along said axial direction (XX') and in rotation about the axis (XX') of said pipe, enabling it to travel around the circumference of the inside surface (2c) of said inner pipe; and
- automatic electronic control means for said probe displacement means; and
- electronic means for analyzing and controlling the signals from said probe and connected (10a, 10c) to said probe;
the device being **characterized in that** it further comprises:
- a structure (8a) suitable for fitting to the end of said inner pipe or of said junction forging (20) with the help of fastener means (8b);
- a said structure (8a) having a central guide cavity (9a) in which a shaft (9) is axially mounted and is suitable for being driven in axial translation inside said inner pipe, preferably with the help of jacks or an electric motor;
- said shaft being suitable for being driven in rotation about its axis (XX'), preferably with the help of an electric motor (9b), and including at its end a transverse arm (9e) extending radially relative to the axis of said inner pipe and preferably suitable for being driven in radial translation, and being suitable for being driven in rotation by rotating said shaft; and
- said probe being mounted at the end of said arm (9e), preferably via a hinge or ball joint (9f).

13. A method of coupling an inner pipe (2) with a coaxial outer pipe (3) in an assembly of two coaxial pipes, the method being **characterized by**:
- welding the end of said outer pipe on the surface of said inner pipe; and
- inspecting said weld by a method according to any one of claims 1 to 9 with the help of a device according to claim 12.

14. A method of connecting together two unit elements of a set of two coaxial pipes each comprising an inner pipe (2) and an outer pipe (3), the method being **characterized by**:
- assembling a junction forging to the ends of said internal and outer pipes of each unit element of a set of two pipes by welding said forging to said ends of the internal and outer pipes; and
- inspecting the weld between said forging and the end of the inner pipe by a method according to claim 10 with the help of a device according to claim 12.

## Patentansprüche

1. Verfahren zur Kontrolle einer im wesentlichen kreisförmigen Umfangsschweißnaht (4) für die Verbindung einer inneren Leitung (2) und einer hierzu koaxialen äußeren Leitung (3), entweder direkt oder durch ein geschmiedetes Verbindungsteil (20), mittels einer Ultraschallsonde (10), **dadurch gekennzeichnet, daß**:
- eine robotisierte Ultraschallsonde (10) mit einer Vielzahl piezoelektrischer, mehrstrahliger Sender-Empfänger verwendet wird, und
a) wenigstens eine Ultraschallsonde (10, 10-1, 10-2) innerhalb der inneren Leitung, in axialer Richtung (XX') der inneren Leitung, an der Innenseite (2c) der Wand der inneren Leitung, gegenüber oder in der Nähe der Schweißnaht positioniert wird, so daß die Schallwellenstrahlen der verschiedenen Sender in einer axialen Ebene der inneren Leitung senkrecht zur Ebene der Unterseite (10-3) der Sender wenigstens die gesamte Breite der Schweißnaht in der axialen Richtung (XX') abdecken, und
b) ein Schwenken der unterschiedlichen Wellenstrahlen der verschiedenen Sender der Sonde vollzogen wird, wobei diese in einer vorgegebenen Position angeordnet ist, und
c) die Sonde gegenüber der Achse (XX') der Leitung um einen vorgegebenen Winkel, vorzugsweise kleiner 1°, der vorzugsweise noch einer Bogenlänge kleiner oder gleich der Größe der Schweißfehler, die erfaßt werden sollen, entspricht, drehbewegt wird, dann
d) die Schritte b) und c) wiederholt werden, bis der gesamte Umfang der Schweißnaht kontrolliert ist.

2. Verfahren nach Anspruch 1, **dadurch gekennzeichnet, daß** die Wellenstrahlen der verschiedenen Sender in einer axialen Ebene der inneren Leitung in eine Vielzahl von Neigungsrichtungen (α) mit unterschiedlichen Werten in bezug auf die Ebene der Unterseite (10-3) der Sender gesendet werden, so daß in einer einzigen Abtastsequenz der verschiedenen Strahlen die unterschiedlichen Bereiche der Schweißnaht in ihrer Breite kontrolliert werden, vorzugsweise von der äußeren Spitze (4a) bis zur Wurzel (4c) der Schweißnaht an der Schnittstelle mit der inneren Leitung.

3. Verfahren nach Anspruch 2, **dadurch gekennzeichnet, daß** die Sender in drei benachbarten Bereichen in der axialen Richtung XX' angeordnet sind, darunter:
- ein erster Bereich (11a), in dem die Sender in der axialen Richtung (XX') gegenüber der Schweißnaht versetzt sind, aber Strahlen mit der Neigung (α) in Richtung der Schweißnaht aussenden, und
- ein zweiter mittlerer Bereich (11c), der sich vorzugsweise über die gesamte Breite der Schweißnaht oder wenigstens gegenüber dem mittleren Teil der Breite der Schweißnaht erstreckt und in dem die Sender Strahlen aussenden, die im wesentlichen senkrecht zur Ebene der Unterseite (10-3) der Sender verlaufen (α= 90), und
- ein dritter Bereich (11 b) auf der - bezogen auf den zweiten mittleren Bereich (11 c) - dem ersten Bereich (11a) gegenüberliegenden Seite, der ebenfalls in der axialen Richtung (XX') gegenüber der Schweißnaht versetzt ist und Strahlen mit der genannten Neigung in Richtung der Schweißnaht aussendet.

4. Verfahren nach Anspruch 3, **dadurch gekennzeichnet, daß**:
- die unterschiedlichen Strahlen des ersten Bereichs (11a) in einer Neigung (α) zwischen 30 und 60° parallel verlaufen, und
- die unterschiedlichen Strahlen des dritten Bereichs (11 b) in einer zur Neigung des ersten Bereichs symmetrischen Neigung mit einem Gegenwinkel (α) zwischen 30 und 60 ° parallel verlaufen.

5. Verfahren nach Anspruch 3, **dadurch gekennzeichnet, daß** die Neigungswinkel (α) der unterschiedlichen Strahlen des ersten und des zweiten Bereichs von dem vom Mittelpunkt der Schweißnaht am weitesten entfernten Sender bis zu dem dem Mittelpunkt der Schweißnaht am nächsten befindlichen Sender zunehmen, vorzugsweise um 30 bis 60°.

6. Verfahren nach einem der Ansprüche 3 bis 5, **dadurch gekennzeichnet, daß** jeder Senderbereich (11a, 11b, 11c) 16 bis 1024 piezoelektrische Elemente umfaßt.

7. Verfahren nach einem der Ansprüche 1 bis 6, **dadurch gekennzeichnet, daß** die Schweißnaht (4, 20a-20c) von der Außenseite der inneren Leitung (2) aus hergestellt worden ist.

8. Verfahren nach Anspruch 7, **dadurch gekennzeichnet, daß** die Schweißnaht die Verbindung des Endes (3b) einer äußeren Leitung (3) mit der Außenseite der Wand einer inneren Leitung (2) sicherstellt, wobei das Ende (3b) der äußeren Leitung gegenüber dem Ende (2b) der inneren Leitung zurückspringt.

9. Verfahren nach einem der Ansprüche 1 bis 6, **dadurch gekennzeichnet, daß** die Schweißnaht (20d) von der Innenseite der inneren Leitung (2) aus hergestellt worden ist.

10. Verfahren nach einem der Ansprüche 7 oder 9, **dadurch gekennzeichnet, daß** die Schweißnaht (20b, 20d) die Verbindung des Endes (2b) der inneren Leitung (2) mit dem Ende eines geschmiedeten Verbindungsteils (20) sicherstellt.

11. Verfahren nach einem der Ansprüche 9 oder 10, **dadurch gekennzeichnet, daß** die Schweißnaht (20d) von der Innenseite der inneren Leitung aus hergestellt worden ist und gegenüber der Innenseite (2c) der Wand der inneren Leitung eine Überdicke aufweist, und zwei an der Innenseite auf beiden Seiten der Schweißnaht angeordnete Ultraschallsonden (10-1, 10-2) verwendet werden, wobei jede Sonde (10-1, 10-2) eine Vielzahl von Sendern umfaßt, die Strahlen in Richtung der Schweißnaht, vorzugsweise in einem Winkel von 30 bis 60° aussenden.

12. Vorrichtung zur Kontrolle einer Umfangsschweißnaht (8), die bei einem Verfahren nach einem der Ansprüche 1 bis 11 einsetzbar ist, umfassend:
- wenigstens eine robotisierte Ultraschallsonde (10, 10-1, 10-2) mit einer Vielzahl piezoelektrischer, mehrstrahliger Sender-Empfänger und
- Mittel zum mechanischen Halten der Sonde (8a, 8b, 9d, 9e, 9f) in Position an der Innenseite der Wand einer inneren Leitung und
- motorisierte Mittel zum Verschiebebewegen der Sonde (9, 9b, 9e) in der axialen Richtung (XX') und zu ihrem Drehbewegen um die Achse (XX') der Leitung, wodurch ihr ermöglicht wird, den Umfang der Innenseite (2c) der inneren Leitung abzulaufen, und
- elektronische Mittel zum automatisierten Steuern der Betätigungsmittel der Sonde und
- elektronische Mittel zur Analyse und Steuerung der Signale der Sonde, die mit der Sonde verbunden sind (10a, 10c),
**dadurch gekennzeichnet, daß** sie umfaßt:
- ein Gestell (8a), welches geeignet ist, mit Hilfe von Befestigungsmitteln (8b) an das Ende der inneren Leitung oder das Verbindungsteil (20) angefügt zu werden,
- wobei das Gestell (8a) einen mittleren Führungshohlraum (9a) umfaßt, in dem eine Welle (9) axial angebracht ist, die geeignet ist, innerhalb der inneren Leitung, vorzugsweise mit Hilfe von Zylindern oder eines Elektromotors axial translatorisch angetrieben zu werden,
- wobei die Welle geeignet ist, um ihre Achse (XX') drehangetrieben zu werden, vorzugsweise mit Hilfe eines Elektromotors (9b), und an ihrem Ende einen Querarm (9e) aufweist, der gegenüber der Achse der inneren Leitung radial verläuft und vorzugsweise geeignet ist, radial translatorisch angetrieben zu werden, und geeignet ist, durch Drehen der Welle drehangetrieben zu werden,
- wobei die Sonde am Ende des Arms (9e) angebracht ist, vorzugsweise mittels eines Gelenks oder Kugelgelenks (9f).

13. Verfahren zum Verbinden einer inneren Leitung (2) und einer hierzu koaxialen äußeren Leitung (3) einer Anordnung von zwei koaxialen Leitungen, **dadurch gekennzeichnet, daß**:
- ein Anschweißen des Endes der äußeren Leitung an der Fläche der inneren Leitung vollzogen wird und
- die Schweißnaht mittels eines Verfahrens nach einem der Ansprüche 1 bis 9 mit Hilfe einer Vorrichtung nach Anspruch 12 kontrolliert wird.

14. Verfahren zum Verbinden von zwei Einzelelementen einer Anordnung von zwei koaxialen Leitungen, jeweils umfassend eine innere Leitung (2) und eine äußere Leitung (3), **dadurch gekennzeichnet, daß**:
- ein geschmiedetes Verbindungsteil mit den Enden der inneren und der äußeren Leitung eines jeden Einzelelements einer Anordnung von zwei Leitungen durch Schweißen zwischen dem geschmiedeten Teil und den Enden der inneren und äußeren Leitung verbunden wird und
- die Schweißnaht zwischen dem geschmiedeten Teil und dem Ende der inneren Leitung mittels eines Verfahrens nach Anspruch 10 mit Hilfe einer Vorrichtung nach Anspruch 12 kontrolliert wird.
